# EUROPÄISCHE PATENTSCHRIFT

(11) **EP 2 818 358 B1**
(45) Veröffentlichungstag und Bekanntmachung des Hinweises auf die Patenterteilung: **25.01.2017**
(21) Anmeldenummer: 14163934.4
(22) Anmeldetag: 08.04.2014
(51) Int. Cl.: B60N 2/22, B60N 2/48

(54) **Fahrzeugsitz und Nutzkraftfahrzeug mit einem Fahrzeugsitz**
Vehicle seat and commercial motor vehicle with a vehicle seat
Siège de véhicule et véhicule utilitaire doté d'un siège de véhicule

(30) Priorität: 26.06.2013 DE 102013106718; 20.09.2013 DE 102013110445
(43) Veröffentlichungstag der Anmeldung: 31.12.2014
(73) Patentinhaber: GRAMMER AG, 92224 Amberg (DE)
(72) Erfinder: Übelacker, Roland, 92536 Pfreimd (DE); Haller, Erwin, 92262 Birgland (DE); Nuss, Ralph, 92284 Poppenricht (DE); Delling, Gerhard, 92546 Schmidgaden (DE)
(74) Vertreter: Hannke, Christian

(56) Entgegenhaltungen:
- EP-A1- 2 599 658
- EP-A1- 2 599 659
- FR-A1- 2 932 429
- US-A- 3 342 528

## Beschreibung

Die Erfindung betrifft einen Fahrzeugsitz, insbesondere einen Nutzkraftfahrzeugsitz, mit einem Sitzteil, mit einer Rückenlehne umfassend ein Rückenlehnenunterteil und ein Rückenlehnenoberteil, und mit einer Haltevorrichtung, mittels welcher das Rückenlehnenoberteil gegenüber dem Rückenlehnenunterteil verlagerbar gehaltert ist. Darüber hinaus betrifft die Erfindung ein Nutzkraftfahrzeug, insbesondere ein landwirtschaftliches Nutzkraftfahrzeug, mit wenigstens einem Fahrzeugsitz.

Gattungsgemäße Fahrzeugsitze insbesondere für Nutzkraftfahrzeuge und speziell für landwirtschaftliche Nutzkraftfahrzeuge sind aus dem Stand der Technik vielfältig und gut bekannt.

Ein gattungsgemässer Fahrzeugsitz ist aus dem Dokument EP2599659A1 bekannt.

Insbesondere Fahrzeugführer von landwirtschaftlichen Nutzkraftfahrzeugen nehmen bei ihrer Arbeit mit diesen landwirtschaftlichen Nutzkraftfahrzeugen und daran angehängten Arbeitsgeräten oftmals über einen längeren Zeitraum eine von der normalen nach vorne, also in Fahrrichtung, gerichteten Fahrsitzhaltung eine seitlich oder rückwärtig ausgerichtete weitere Sitzarbeitshaltung ein, um beispielsweise seitlich hinten in der Fahrzeugkabine angeordnete Bedienorgane besser erreichen und bedienen zu können, oder auch nur um ein hinter dem landwirtschaftlichen Nutzkraftfahrzeug angehängtes Arbeitsgerät für einen längeren Zeitraum besser beobachten zu können.

Um dem Fahrzeugführer bei dieser seitlich oder rückwärtig ausgerichteten Sitzarbeitshaltung einen bedientechnisch erleichterten Zugang zu rückwärtig angeordneten Bedienorgangen oder auch nur optisch einen rückwärtigen Arbeitsbereich hinter einem Fahrzeugsitz besser einsehen bzw. beobachten zu können, ist aus der Offenlegungsschrift DE 30 46 049 A1 ein Fahrersitz bekannt, bei welchem die Rückenlehne zumindest zweigeteilt ist, und hierbei dementsprechend über ein oberes Rückenlehnenteil und ein unteres Rückenlehnenteil verfügt, wobei zumindest das obere Rückenlehnenteil um eine vertikale Achse verschwenkbar ist. Hierdurch kann der Fahrer sich jederzeit mit seinem oberen Rumpfbereich bzw. Oberkörper drehen, um beispielsweise die hinter dem Fahrzeugsitz liegenden Bedienorgane zu erreichen, da sich das obere Rückenlehnenteil um diese vertikale Achse drehen kann. Zwar kann der Fahrzeugführer hierbei über das untere Rückenlehnenteil hinweg problemlos nach hinten greifen, da das obere Rückenlehnenteil um die vertikale Achse gedreht ist, jedoch erfährt der Fahrzeugführer bei dieser Lösung keinerlei oder nur eine sehr unzureichende Abstützung seines Oberkörpers bei einer entsprechend seitlich oder rückwärtig ausgerichteten Sitzarbeitshaltung. Insofern wird der Fahrzeugführer durch das obere Rückenlehnenteil kaum nennenswert gestützt.

Bei einer anderen jüngeren Lösung können Fahrzeugführer zwischenzeitlich den gesamten Fahrzeugsitz, also die im Wesentlichen gesamte starre Sitzkonstruktion mitsamt dem Sitzteil und der Rückenlehne, mit Hilfe eines Drehadapters um eine definierte Drehhochachse drehen, um einen rückwärtigen Raum innerhalb der Fahrzeugkabine besser erreichen bzw. außerhalb der Fahrzeugkabine besser beobachten zu können. Dabei bleibt das Sitzteil in Relation zur gesamten Rückenlehne fest stehen. Etwaige Anbauteile am Fahrzeugsitz, beispielsweise eine Multifunktionsarmlehne, drehen sich ebenso in Relation dazu mit. Bedienhebel aber, die weiter hinten seitlich in der Fahrzeugkabine angeordnet sind, können dadurch immer noch nicht komfortabel betätigt werden.

Die letztgenannte Lösung führt darüber hinaus dazu, dass der Fahrzeugführer sich aus einer komfortablen Sitzpolsterkontur des Fahrzeugsitzes herausdrehen muss, um insbesondere die Pedalerie des landwirtschaftlichen Nutzkraftfahrzeugs weiter einigermaßen betriebssicher betätigen zu können. Dies wiederum kann zu Druckstellen und damit zu einem Diskomfort speziell im Gesäß- und Oberschenkelbereich des Fahrzeugführers führen.

Speziell die Rückenpolsterkontur ist aktuell derart ausgeformt, dass der Fahrzeugführer in der vorwärts gerichteten Fahrsitzhaltung maximal möglich gestützt wird, ohne ihm die notwendigen Freiheitsgrade zu nehmen, die er für seine Bewegungen im Fahrbetrieb benötigt. Um eine Bewegungsfreiheit im Schulter-Armbereich nicht zu behindern, darf das Rückenpolster der Rückenlehne im oberen Bereich nicht zu sehr konturiert sein. Um jedoch eine gute Abstützung und damit eine ausreichend gute Entlastung des Fahrzeugführers zu gewährleisten, sollte eine Abstützfläche in allen Fahrpositionen immer möglichst groß sein. Dies kann aus den vorher genannten Gründen, wie etwa die erforderlichen Freiheitsgrade für eine gute Bewegung, aktuell nur bedingt und daher unbefriedigend erzielt werden, da der Fahrer zwischen zwei extrem unterschiedlichen Fahrpositionen wechselt.

Ein weiterer großer Nachteil ist darin zu sehen, dass der mögliche Schwenkbereich des Drehadapters dadurch limitiert ist, dass das Nutzkraftfahrzeug trotz der Beobachtung der hinteren Arbeitsgeräte weiter über die Pedalerie und das Lenkrad verkehrssicher gesteuert werden muss. Um diesen Ansprüchen gerecht zu werden, muss der Fahrzeugführer oftmals über einen längeren Zeitraum eine Zwangshaltung einnehmen, welche unweigerlich zu einer kritischen Torsion des gesamten Körpers führt. Wissenschaftliche Untersuchungen zeigen zudem, dass eine derartige Zwangshaltung insbesondere unter Schwingungsbelastung zur Schädigung der Körperstrukturen führen kann, speziell wenn der Körper nicht ausreichend gut unterstützt wird. Des Weiteren steht fest, dass die Belastung der Wirbelsäule durch eine gute Abstützung über das Rückenlehnenteil signifikant reduziert werden kann.

Es ist Aufgabe der Erfindung, einem Fahrzeugführer einen verbesserten Sitzkomfort speziell bei einer Einnahme einer derartigen Zwangshaltung zu bieten, um insbesondere ein landwirtschaftliches Nutzkraftfahrzeug betriebssicherer und insbesondere verkehrssicherer führen zu können. Zudem ist es eine weitere Aufgabe der Erfindung, den Fahrzeugführer bei der Einnahme dieser Zwangshaltung vor einer vorzeitigen Ermüdung zu bewahren.

Die Aufgabe der Erfindung wird von einem Fahrzeugsitz gemäss Anspruch 1 gelöst.

Die vorliegende Gleitführungseinrichtung eignet sich besonders gut eine verschleißarme und damit auch eine dauerhaft spielfreie Lagerung des Rückenlehnenoberteils zu gewährleisten, mittels welcher selbst große Abstützkräfte aufgenommen und übertragen werden können. Dies ist besonders wichtig bei starken Stoßbelastungen, wie sie insbesondere an landwirtschaftlich genutzten Nutzkraftfahrzeugen häufig auftreten.

Ist insbesondere ein Nutzkraftfahrzeugsitz mit einer derartigen Gleitführungseinrichtung ausgerüstet, gelingt es den Fahrzeugführer bei einer nach hinten gerichteten Zwangsarbeitshaltung besonders gut abzustützen, ohne dass hierbei das Rückenlehnenoberteil der Rückenlehne ihm den Zugang an hinter dem Fahrzeugsitz befindliche Bedienorgane bzw. die Sicht auf ein durch das Nutzkraftfahrzeug geschlepptes Arbeitsgerät versperrt.

Im Gegensatz zu den aus dem Stand der Technik bekannten Lösungen kann mittels des Rückenlehnenoberteils nunmehr zusätzlich der Fahrzeugführerrumpf bei einer seitlich nach hinten gerichteten Zwangshaltung vorteilhaft abgestützt werden, wodurch eine besonders vorteilhafte Entlastung der Körperstrukturen bzw. der Körperrumpfstrukturen des Fahrzeugführers erzielt wird, so dass auch eine vorzeitige Ermüdung verhindert und damit auch die Arbeitseffizienz erhöht werden kann.

Das Rückenlehnenoberteil kann als Rückenlehnenverlängerung, nicht jedoch als separate Kopfstütze, allenfalls als integrierte Kopfstütze mit enthaltend verstanden werden.

Mithilfe der erfindungsgemäßen Gleitführungseinrichtung gelingt es auf konstruktiv besonders einfache Weise, das Rückenlehnenoberteil aus einer direkt oberhalb des Rückenlehnenunterteils platzierten Parkposition, welche bevorzugt mittig der Rückenlehne positioniert ist, hinaus und bis in eine seitlich der Rückenlehne befindliche Abstützlage hinein zu verschieben, um dort eine zusätzliche Fahrzeugführerrumpfabstützung zu ermöglichen.

Um verschiedenste Effekte hinsichtlich der Gleitführungseinrichtung erzielen zu können, kann diese vielfältig ausgestaltet sein, wie nachstehend noch erläutert ist.

An dieser Stelle soll jedoch zuerst erläuternd auf einzelne Begriffe und auf die Funktion hinsichtlich der zusätzlichen Fahrzeugführerrumpfabstützung eingegangen werden, wie sie mit dem gleitgelagerten Rückenlehnenoberteil erzielt werden kann.

Der Begriff "Sitzteil" umschreibt im Sinne der Erfindung denjenigen Bereich des Fahrzeugsitzes, auf welchem der Fahrzeugführer mit seinem Gesäß Platz nimmt. Insofern gestaltet das Sitzteil mithilfe von Sitzteilpolsterelementen eine entsprechende Sitzfläche aus.

Dementsprechend beschreibt der Begriff "Rückenlehne" einen Bereich des Fahrzeugsitzes, an welchem sich der Fahrzeugführer im Wesentlichen mit seinem Rücken abstützen kann, während er auf dem Sitzteil sitzt. Die Rückenlehne erstreckt sich demnach vom hinteren Ende des Sitzteils aus hochwärts über das Sitzteil hinaus.

Hierbei ist die Rückenlehne in ein Rückenlehnenoberteil und in ein Rückenlehnenunterteil gegliedert, wobei das Rückenlehnenoberteil mittels der Gleitführungseinrichtung gegenüber dem Rückenlehnenunterteil und damit auch gegenüber dem Sitzteil verschieblich gelagert ist.

Das Rückenlehnenunterteil ist vorzugsweise ortsfest gegenüber dem Sitzteil an dem Fahrzeugsitz angeordnet. Dies ist jedoch nicht zwingend erforderlich. Das Rückenlehnenunterteil stellt somit einen gegenüber dem Sitzteil ortsfesten Teil der Rückenlehne dar.

Insofern stellt das Rückenlehnenoberteil einen gegenüber dem Sitzteil seitlich verschieblichen Teil der Rückenlehne dar.

Hierzu ist die Haltevorrichtung vorgesehen, welche idealerweise unmittelbar an dem Rückenlehnenunterteil befestigt ist, um das Rückenlehnenoberteil gegenüber diesem Rückenlehnenunterteil entlang einer Verlagerungskurve verschieben zu können. Es ist jedoch bei entsprechender Ausgestaltung des Fahrzeugsitzes auch möglich, dass diese Haltevorrichtung an einem anderen Bereich der Rückenlehne bzw. an einem Gestell des Fahrzeugsitzes vorgesehen ist. Alternativ kann diese Haltevorrichtung auch karosserieseitig des jeweiligen Nutzkraftfahrzeuges vorgesehen sein, um das Rückenlehnenoberteil gegenüber dem Rückenlehnenunterteil entsprechend linearverschieblich haltern bzw. lagern zu können.

Jedenfalls kann mit dem vorliegenden Rückenlehnenoberteil im Sinne der Erfindung eine außerhalb des Sitzteils und der Rückenlehne anordenbare zusätzliche Fahrzeugführerrumpfabstützeinrichtung bereitgestellt werden, um den Fahrzeugführer in der Zwangshaltung hinsichtlich einer seitlich oder rückwärtig ausgerichteten Sitzarbeitshaltung zusätzlich abzustützen.

Demnach gelingt mit diesem erfindungsgemäß geführten Rückenlehnenoberteil einerseits eine erhebliche Sitzkomfortverbesserung.

Andererseits wird der Fahrzeugführer darüber hinaus auch vor einer vorzeitigen Ermüdung geschützt, insbesondere wenn er über einen langen Zeitraum den rückwärtigen Bereich des Nutzkraftfahrzeugs visuell überwachen muss. Speziell hierdurch wird die Unfallgefahr erheblich reduziert und somit die Arbeitssicherheit erhöht.

Das Rückenlehnenoberteil bzw. die durch dieses verkörperte Fahrzeugführerrumpfabstützeinrichtung sind zumindest teilweise in einem ansonsten fahrzeugsitzfreien Abstützbereich in Höhe des Bereichs der oberen Hälfte von der Rückenlehne, und außer mittig seitlich der Rückenlehne temporär derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außer mittig seitlich der Rückenlehne abgestützt ist, wobei die zusätzliche Fahrzeugführerrumpfabstützeinrichtung mit einer Verlagerungseinrichtung von der Parkposition in eine zusätzliche Abstützlage in dem ansonsten fahrzeugsitzfreien Abstützbereich verlagerbar angeordnet ist.

Im vorliegenden Fall handelt es sich bei der Verlagerungseinrichtung um die Gleitführungseinrichtung.

Vorteilhafterweise kann der Fahrzeugführer durch die derart angeordnete zusätzliche Fahrzeugführerrumpfabstützeinrichtung während einer Zwangshaltungseinnahme, insbesondere der vorstehend beschrieben seitlich oder rückwärtig ausgerichteten Sitzarbeitsstellung, außerordentlich gut entlastet werden. Und vorzugsweise zwar nur dann, wenn es erforderlich ist, steht die zusätzliche Fahrzeugführerrumpfabstützeinrichtung zur Verfügung. Ansonsten, etwa in einer vorwärts ausgerichteten Fahrposition, stört die zusätzliche Fahrzeugführerrumpfabstützeinrichtung nicht, da sie in ihrer Ruhelage bzw. angestammten Parkposition verbleibt.

Vorteilhaft ist die zusätzliche Fahrzeugführerrumpfabstützeinrichtung, und somit auch das Rückenlehnenoberteil, derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist.

Der Begriff "zusätzliche Fahrzeugführerrumpfabstützeinrichtung" beschreibt im Sinne der Erfindung eine Einrichtung zur zusätzlichen Rumpfabstützung des Fahrzeugführers während einer Zwangshaltung am Fahrzeugsitz. Die konstruktive Umsetzung dieser zusätzlichen Fahrzeugführerrumpfabstützeinrichtung gelingt mit dem hier beschriebenen Rückenlehnenoberteil baulich besonders einfach, so dass bei entsprechender konstruktiven Ausgestaltung beide Begriffe synonym verwendet werden können.

In vorliegendem Zusammenhang beschreibt die Begrifflichkeit "Rumpf" anatomisch den zentralen Bereich eines menschlichen Körpers und der Rumpf umfasst den Brustkorb, den Bauch, den Rücken sowie das Becken des menschlichen Körpers.

Insofern ist es vorteilhaft, wenn die zusätzliche Fahrzeugführerrumpfabstützeinrichtung eine Anlagefläche für einen Rücken- und/oder Schulterbereich eines Fahrzeugführers umfasst, wobei die Anlagefläche vorteilhafter Weise ergonomisch geformt ist, um der menschlichen Körperanatomie besonders gut zu entsprechen. Erst dies fördert besonders die Akzeptanz beim Fahrzeugführer eine derartige zusätzliche Rumpfabstützung häufig zu gebrauchen. Zumal ist der Körper des Fahrzeugführers durch eine derartige Anlagefläche vor Verletzungen gut geschützt, da es speziell im Einsatz mit landwirtschaftlichen Nutzfahrzeugen im Arbeitsbetrieb auf dem Acker oftmals sehr rau zugeht und der Fahrzeugführer hierbei für jede gezielte Rumpfabstützung dankbar ist.

Aber nicht nur eine derart entsprechend ausgeformte Anlagefläche ist vorteilhaft. Vielmehr ist es noch besser, diese Anlagefläche im Raum auch richtig ausgerichtet zu platzieren. Dies gelingt mit vorliegender Gleitführungseinrichtung auf konstruktiv erstaunlich einfache und besonders effektive Weise, wie im Zusammenhang mit dem Rückenlehnenoberteil ausführlich erläutert.

Mit dem Begriff "fahrzeugsitzfreier Rumpfabstützbereich" ist im Sinne der Erfindung ein Bereich am Fahrzeugsitz beschrieben, in welchem permanente Abstützeinrichtungen des Fahrzeugsitzes nicht sinnvoll dauerhaft angeordnet sein können, da sie im normalen Fahrbetrieb zu sehr störend auf den Fahrzeugführer wirken würden.

Der vorliegende fahrzeugsitzfreie Rumpfabstützbereich liegt hierbei einerseits im Wesentlichen im oberen Drittel der Rückenlehne, also oberhalb der halben Höhe der Rückenlehne und damit oftmals auch im unmittelbaren Sichtbereich seitlichen bzw. rückwärtigen Sichtbereich des Fahrzeugführers. Er kann sich auch noch bis oberhalb des oberen Drittels erstrecken. Allein deshalb ist dieser fahrzeugsitzfreie Rumpfabstützbereich zumindest im normalen Vorwärtsfahrbetrieb unbedingt freizuhalten. Demnach ist er nicht mit einem herkömmlichen Abstützbereich zu verwechseln. Andererseits befindet sich der fahrzeugsitzfreie Rumpfabstützbereich im Sinne der Erfindung außermittig der Rückenlehne. Allein hierdurch ist er nicht mit einem herkömmlichen Abstützbereich zu verwechseln, in welchem eine Kopfstütze platziert ist. Erst recht nicht, da der fahrzeugsitzfreie Rumpfabstützbereich zudem vor der Rückenlehne bzw. einem Rückenlehnenpolsterteilelement, und seitlich hiervon angeordnet ist. Insofern ist der vorliegende fahrzeugsitzfreie Rumpfabstützbereich auch seitlich und oberhalb des Sitzteils des Fahrzeugsitzes vorgesehen.

Die Beschreibung "seitlich oder rückwärtig ausgerichteten Sitzarbeitshaltung" formuliert vorliegend eine Zwangshaltung des Fahrzeugführers bezüglich einer Oberkörperdrehung, um hierbei einen rückseitigen Arbeitsbereich insbesondere hinter dem landwirtschaftlichen Nutzfahrzeug besser beobachten zu können.

An dieser Stelle sei darauf hingewiesen, dass der vorliegende erfinderische Fahrzeugsitz nicht nur hinsichtlich eines Fahrzeugführers vorteilhaft eingesetzt werden kann. Vielmehr ist der erfindungsgemäße Fahrzeugsitz nahezu in jedem Anwendungsbereich einsetzbar, in welchem im Umfeld des Fahrzeugsitzes zumindest temporär eine zusätzliche Rumpfabstützung bereitgestellt werden soll.

Besonders stabil kann die zusätzliche Fahrzeugführerrumpfabstützeinrichtung von der Parkposition in die zusätzliche Rumpfabstützlage hinein verlagert werden, wenn die Verlagerungseinrichtung Mittel zum translatorischen Verlagern der zusätzlichen Fahrzeugführerrumpfabstützeinrichtung aufweist, wie dies mit der vorliegenden Gleitführungseinrichtung hinsichtlich des Rückenlehnenoberteils der Fall ist.

Eine in diesem Zusammenhang besonders vorteilhafte Ausführungsvariante sieht vor, dass die Gleitführungseinrichtung derart ausgestaltet ist, dass das Rückenlehnenoberteil beim seitlichen Verlagern zusätzlich um die Verlagerungskurve und/oder um eine quer zu der Verlagerungskurve verlaufende Querachse dreht.

Die vorliegende Fahrzeugführerrumpfabstützung wird nicht nur allein dadurch erzielt, dass das Rückenlehnenoberteil entlang der Verlagerungskurve seitlich über wenigstens einen der Seitenränder des Rückenlehnenunterteils linearverschieblich ist, sondern dass darüber hinaus das Rückenlehnenoberteil hierbei zusätzlich noch um diese Verlagerungsachse dreht, wodurch das Rückenlehnenoberteil sogleich nach hinten geneigt wird, wodurch insbesondere eine Abstützfläche für den Fahrzeugführerrumpf außergewöhnlich gut ausgerichtet in einem ansonsten fahrzeugsitzfreien Abstützbereich positioniert wird.

Diese Abstützfläche kann besonders gut mit an dem Rückenlehnenoberteil entsprechend vorgesehenen Rückenlehnenpolsterteilen ausgestaltet sein, wobei diese Rückenlehnenpolsterteile somit mit dem Rückenlehnenoberteil verschieblich sind.

Es versteht sich, dass dementsprechend das Rückenlehnenoberteil, aber auch das Rückenlehnenunterteil jeweils über Polsterteile zum Polstern der Rückenlehne insgesamt verfügen können, wobei diese Polsterteile entsprechend verschieblich zueinander angeordnet sind.

Kumulativ oder alternativ dreht das Rückenlehnenoberteil bei dessen seitlichen Verlagern um eine quer zur Längsverlagerungsachse verlaufenden Querachse, wodurch das Rückenlehnenoberteil zusätzlich noch um diese Querachse bezogen auf die Breitenerstreckung des Rückenlehnenoberteils nach unten geneigt werden kann, wodurch der Abstützkomfort für den Fahrzeugführer noch weiter erhöht werden kann.

Die Breitenerstreckung des Rückenlehnenoberteils fluchtet im Wesentlichen mit der Fahrzeugbreitenerstreckung, wenn sich das Rückenlehnenoberteil in seiner Parkposition befindet.

Bei der Querachse handelt es sich im Wesentlichen um eine Horizontalachse, die quer zur Verlagerungskurve angeordnet ist.

Die Verlagerungskurve verläuft hierbei idealweise quer zu der dem Fahrzeugsitz inne wohnende Hauptsitzrichtung, wobei die Hauptsitzrichtung im Normalfall in Richtung der Fahrzeuglängserstreckung verläuft. Somit kann das Rückenlehnenoberteil in einen seitlichen Bereich des Fahrzeugsitzes hinein verschoben und damit bei Bedarf derart vorteilhaft umplatziert werden, dass der Fahrzeugführer sich mit seinem Schulter-Armbereich bis über das Rückenlehnenunterteil drehen bzw. beugen kann, wo zuvor noch das Rückenlehnenoberteil in seiner Parkposition angeordnet war, und hierbei dennoch im oberen Bereich seines Rückens von dem in die Abstützlage hinein verschobenen Rückenlehnenoberteil gestützt werden kann.

Bei der Verlagerungskurve kann es sich um eine körperliche Bauteilachse oder um eine fiktive Achse außerhalb eines oder mehrerer Bauteile oder einer Bauteilgruppe handeln.

Insofern ist es vorteilhaft, wenn die Verlagerungskurve quer zur Hauptsitzrichtung des Fahrzeugsitzes verlaufend angeordnet ist.

Die Verlagerungskurve erstreckt sich vorliegend idealerweise in der Hauptverschieberichtung, in welche das Rückenlehnenoberteil seitlich über den Seitenrand des Rückenlehnenunterteils hinaus verschoben wird.

Der zuvor beschriebene Bewegungsablauf des Rückenlehnenoberteils kann konstruktiv besonders einfach umgesetzt werden, wenn die Gleitführungseinrichtung zumindest teilweise helixförmig ausgestaltet ist.

Beispielsweise umfasst die Linearführungseinrichtung hierzu ein oder mehrere Gleitführungselemente, welche sich helixförmig, das heißt schraubenförmig, um die Verlagerungskurve herum erstreckend angeordnet sind, sodass das Rückenlehnenoberteil im Falle einer entsprechenden Linearverschiebung konstruktiv einfach um diese Verlagerungskurve drehbar ist.

Insofern ist das Rückenlehnenoberteil in diesem Fall vorteilhafterweise in Abhängigkeit einer Linearverschiebung drehbar um die Verlagerungskurve gelagert.

Im Sinne der Erfindung werden vorliegend unter dem Begriff "Gleitführungselemente" längliche Führungselemente verstanden, welche gleitkörpergelagert sind.

Es versteht sich, dass sich derartige helixförmige Gleitführungselemente in vielfältiger Weise konstruktiv realisieren lassen, um hierdurch die Linearführungseinrichtung zumindest teilweise helixförmig auszugestalten. Beispielsweise ist ein derartiges mit Führungsnuten und/oder Führungsstegen ausgestattetes Führungselement entlang der Verlagerungskurve in sich verdreht.

Es hat sich in Praxistests herausgestellt, dass die Haltevorrichtung und insbesondere die Gleitführungseinrichtung hiervon sehr große Fahrzeugführerrumpfabstützkräfte aufnehmen können, wenn die Gleitführungseinrichtung zwei übereinander und voneinander beabstandet angeordnete Gleitführungselemente umfasst, wobei eines der Gleitführungselemente im Verlauf der Verlagerungskurve gegenüber dem anderen der Gleitführungselemente verschieden positioniert ist.

Das heißt mit anderen Worten, dass das eine Gleitführungselement in Richtung der Verlagerungskurve zumindest teilweise mit einer veränderten Lage gegenüber dem anderen Gleitführungselement angeordnet ist.

Hierbei formulieren das erste Gleitführungselement eine erste Kurvenbahn und das zweite Gleitführungselement eine zweite Kurvenbahn, welche zumindest teilweise mit einem sich verändernden Achsversatz zueinander angeordnet sind. Insofern sind die beiden Gleitführungselemente mit einem sich verändernden Achsversatz ortsfest zueinander angeordnet. Hierdurch sind die beiden Kurvenbahnen zumindest bereichsweise windschief zueinander angeordnet.

Der Begriff "Gleitführungselemente" beschreibt im Sinne der Erfindung länglich ausgestaltete Gleitelemente, welche verschieblich mit entsprechenden Lagermitteln geführt gelagert sind. Es ist klar, dass auch mehr als zwei solcher Gleitführungselemente vorgesehen werden können, wodurch die Stabilität der Lineargleitführungsvorrichtung erhöht werden kann; jedoch verkompliziert sich hierdurch auch der konstruktive Aufwand entsprechend.

Sind die beiden nebeneinander aber voneinander beabstandet angeordneten Gleitführungselemente mit einem derartigen Verlauf zueinander angeordnet bzw. ausgerichtet, kann konstruktiv besonders einfach ein Achsversatz bezüglich dieser beiden Gleitführungselemente erzielt werden, wodurch das Rückenlehnenoberteil beim seitlichen Verlagern um die Verlagerungskurve im Sinne der Erfindung geneigt werden kann.

Eine derartige Linearverschiebung des Rückenlehnenoberteils kann beispielsweise pneumatisch oder hydraulisch mit entsprechenden Pneumatik- bzw. Hydraulikzylinderelementen erfolgen.

Ein besonders einfach bauender Mechanismus hinsichtlich der Gleitführungseinrichtung kann jedoch erzielt werden, wenn die Verschiebung manuell, gegebenenfalls noch durch ein oder mehrere Federelemente mechanisch unterstützt, erfolgt.

Jedenfalls ist es vorteilhaft, wenn die Gleitführungseinrichtung wenigstens ein in einem Gleitlagerelement gleitgeführtes Gleitführungselement umfasst.

Es versteht sich, dass entsprechende Gleitführungselemente in nahezu beliebiger Ausgestaltung und Anordnung an der Gleitführungseinrichtung vorgesehen sein können.

Auch entsprechend den Gleitführungselementen ausgestaltete Gleitlagerelemente können dementsprechend in nahezu beliebiger Ausgestaltung und Anordnung an der Gleitführungseinrichtung vorhanden sein.

Um das Rückenlehnenoberteil beispielsweise händisch mit nur einer geringen Verschiebekraft verschieben zu können, ist es vorteilhaft, wenn das wenigstens ein Gleitführungselement durch Materialausnehmungen an seiner Gleitinnenseite eine Gleitbuchse mit einer reduzierten Gleitfläche aufweist.

Weist das wenigstens eine Gleitführungselement elastische Lagerarmelemente oder feste Lagerstege auf, welche eine Gleitbuchse ausgestalten, kann das Lagerverhalten des Gleitführungselement gegenüber dem Gleitlagerelement anwendungsspezifisch bzw. kundenspezifisch variiert werden.

Des Weiteren ist es vorteilhaft, wenn die Gleitführungseinrichtung einen Gleitlagerelementehalter aufweist, mittels welchem wenigstens zwei Gleitlagerelemente übereinander angeordnet gehaltert sind.

Weist die Gleitführungseinrichtung insbesondere einen einzigen Gleitlagerelementehalter auf, in welchem alle Gleitlagerelement innerhalb des Rückenlehnenoberteils angeordnet sind, kann die Gleitführungseinrichtung besonders kompakt gebaut werden.

Die vorliegende Gleitführungseinrichtung lässt sich somit baulich besonders platzsparend in dem Fahrzeugsitz integrieren, wenn die Gleitführungseinrichtung Stangen- und/oder Rohrgleitelemente aufweist, welche innerhalb des Rückenlehnenoberteils angeordnet sind.

Idealerweise sind diese Stangen- und/oder Rohrgleitelemente vollständig in dem Rückenlehnenoberteil integriert, sie können bei entsprechender Ausgestaltung jedoch auch nur teilweise innerhalb des Rückenlehnenoberteils angeordnet sein.

Jedenfalls kann das Rückenlehnenoberteil mithilfe dieser Stangen- und/oder Rohrgleitelemente entlang der Verlagerungskurve verschoben werden, sodass das Rückenlehnenoberteil zumindest teilweise in den ansonsten fahrzeugsitzfreien Rumpfabstützbereich hinein geschoben werden kann.

Vorteilhafterweise sind die Stangen- und/oder Rohrgleitelemente derart innerhalb des Rückenlehnenoberteils angeordnet, dass sie gemeinsam mit dem Rückenlehnenoberteil verlagert werden, um die Verlagerungskurve zumindest teilweise auszugestalten. Hierdurch kann gewährleistet werden, dass bei einer Verlagerung die Stangen- und/oder Rohrgleitelemente gemeinsam mit dem Rückenlehnenoberteil in den ansonsten fahrzeugsitzfreien Rumpfabstützbereich verschoben vollständig werden, sodass oberhalb des Rückenlehnenunterteils ein Bauteilkomponenten freier Bereich im oberen Bereich der Rückenlehne am Fahrzeugsitz geschaffen werden kann.

Um derartige Gleitführungselemente betriebssicher führen zu können, ist es vorteilhaft, wenn die Gleitführungseinrichtung Gleitlagerelemente aufweist, welche an dem Rückenlehnenunterteil angeordnet sind, und an welchen Stangen- und/oder Rohrgleitelemente quer zur Hauptsitzrichtung geführt sind.

An dieser Stelle sei darauf hingewiesen, dass derartige Gleitlagerelemente nicht zwingend an dem Rückenlehnenunterteil befestigt sein müssen. Vielmehr können die bei entsprechender Ausgestaltung diese auch an anderen Bereichen der Rückenlehne oder an einem dem Fahrzeugsitz nebengeordneten Gestell oder dergleichen angeordnet sein.

Vorteilhafterweise sind diese Gleitlagerelemente ortsfest an dem Rückenlehnenunterteil angeordnet, sodass sich ein besonders einfacher Aufbau einer mit der Gleitführungseinrichtung ausgestalteten bzw. ausgestatteten Haltevorrichtung realisieren lässt.

Des Weiteren sieht eine vorteilhafte Ausführungsvariante vor, dass die Gleitführungseinrichtung eine mindestens einmal, vorzugsweise eine mehrfach, gebogene Verlagerungskurve aufweist.

Beispielsweise reicht bereits eine nur einmal gebogene Verlagerungskurve dazu aus, das Rückenlehnenoberteil in eine Abstützlage hinein zu verschieben, welche unterhalb, oberhalb, vor oder hinter der mittigen Parkposition des Rückenlehnenoberteils positioniert ist.

Ist die Verlagerungskurve jedoch mehrfach gebogen, kann das Rückenlehnenoberteil entlang der Verlagerungskurve eine vielfältige Raumlagenveränderung erfahren, wodurch beispielsweise Hindernisse oder dergleichen umkurvt werden können.

Um beispielsweise auch auf dem Weg zwischen der mittigen Parkposition und der zusätzlichen Abstützlage des Rückenlehnenoberteils gegebenenfalls noch vorhandene Hindernisse umfahren zu können, ist es somit vorteilhaft, wenn die Gleitführungseinrichtung eine mehrfach gebogene Verlagerungskurve aufweist.

Es versteht sich, dass das vorliegende Rückenlehnenoberteil in seiner Gesamtheit nur einen oberen Teilbereich der Rückenlehne an sich ausgestalten kann.

Es ist jedoch auch möglich, dass das Rückenlehnenoberteil lediglich ein Rückenlehnenpolsterelement ist, welches mittels der Gleitführungseinrichtung entsprechend entlang einer Verlagerungskurve seitlich wenigstens über einen Seitenrand des Rückenlehnenunterteils linearverschieblich ist, wobei ein Gestell bzw. ein Grundgerüst der Rückenlehne insbesondere gegenüber dem Sitzteil ortsfest ist, sodass lediglich das Rückenlehnenpolsterelement von der mittigen Parkposition in die außermittige zusätzliche Abstützlage hinein verlagert wird.

Jedenfalls umfasst das Rückenlehnenoberteil in beiden Ausführungsformen Rückenlehnenpolsterelemente, mithilfe welcher die vorliegend bereits erläuterte Abstützfläche ausgestaltet werden kann.

Darüber hinaus ist es möglich, dass das Rückenlehnenoberteil in Richtung seiner Breitenstreckung kumulativ auch unterteilt sein kann, sodass das Rückenlehnenteil nicht zur Gänze entlang der Verlagerungskurve verschoben wird, sondern nur eine erste Rückenlehnenoberteilhälfte, wobei diese erste Rückenlehnenoberteilhälfte durch einen Vertikalspalt von einer zweiten Rückenlehnenoberteilhälfte des Rückenlehnenoberteils räumlich getrennt ist.

Jedenfalls sieht eine nicht minder vorteilhafte Ausführungsvariante vor, dass die sich über die Rückenlehne erstreckenden Rückenlehnenteile mit in Sitzrichtung vor den Rückenlehnenteilen befindlichen Rückenlehnenpolsterelementen ausgestattet sind, wobei ein erstes Rückenlehnenpolsterelement ein unteres gegenüber dem Sitzteil in seitlicher Richtung ortsfestes Rückenlehnenpolsterelement ist, und ein weiteres Rückenlehnenpolsterelement oberhalb von dem ersten Rückenlehnenpolsterelement im Bereich des Rückenlehnenoberteils angeordnet ist, wobei das Rückenlehnenoberteil als eine außerhalb des Sitzteils und der Rückenlehne anordenbare zusätzliche Fahrzeugführerrumpfabstützeinrichtung ausgestaltet ist, welche zumindest teilweise in einem ansonsten fahrzeugsitzfreien Abstützbereich in Höhe des Bereichs des Rückenlehnenoberteils und außermittig seitlich der Rückenlehne temporär derart anordenbar ist, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist, wobei die zusätzliche Fahrzeugführerrumpfabstützeinrichtung mit einer Verlagerungseinrichtung von einer mittigen Parkposition in eine zusätzliche Abstützlage in dem ansonsten fahrzeugsitzfreien Abstützbereich verlagerbar angeordnet ist.

Im vorliegenden Fall handelt es sich bei der Verlagerungseinrichtung um die Gleitführungseinrichtung, wie bereits vorstehend erwähnt.

Die Aufgabe der Erfindung wird darüber hinaus auch von einem Nutzkraftfahrzeug, insbesondere von einem landwirtschaftlichen Nutzkraftfahrzeug, mit wenigstens einem Fahrzeugsitz gelöst, bei welchem das Nutzkraftfahrzeug bzw. das landwirtschaftlich genutzte Nutzkraftfahrzeug mit einem Fahrzeugsitz nach einem der hier beschriebenen Merkmale bzw. nach einer der hier beschriebenen Merkmalskombinationen ausgerüstet ist.

Umfasst das Nutzkraftfahrzeug, insbesondere das landwirtschaftlich genutzte Nutzkraftfahrzeug, den erfindungsgemäßen Fahrzeugsitz, kann speziell für den Fahrzeugführer eine zusätzliche Rumpfabstützung im Arbeitsbetrieb insbesondere auf dem Acker oder auf sonstigen unbefestigten Wegen bereitgestellt werden, wodurch der Fahrzeugführer wesentlich besser geschützt ist, wie vorstehend bereits ausführlich erläutert und mehrfach beschrieben.

Weitere Vorteile, Ziele und Eigenschaften vorliegender Erfindung werden anhand anliegender Zeichnung und nachfolgender Beschreibung erläutert, in welchen ein Fahrzeugsitz bei spielhaft mit unterschiedlich ausgestalteten Gleitführungseinrichtungen dargestellt und beschrieben ist.

Komponenten bzw. Bereiche des Fahrzeugsitzes, welche in den einzelnen Figuren baugleich ausgestaltet sind, sind hierbei mit gleichen Bezugszeichen gekennzeichnet, wobei die Komponenten bzw. Bereiche nicht in allen Figuren beziffert und erläutert sein müssen. Insofern sind nur wesentlich geänderte Komponenten bzw. Bereiche, insbesondere hinsichtlich der beispielhaft gezeigten möglichen Gleitführungseinrichtungen, mit neuen Bezugszeichen versehen.

Die Gleitführungseinrichtung kann eine Lineargleitführungseinrichtung und die Verlagerungskurve eine Linearverlagerungsachse sein.
- Figuren 1a und 1b: schematisch eine perspektivische Ansicht eines Nutzkraftfahrzeugsitzes in einem Normalbetriebszustand, in welchem das Rückenlehnenoberteil in einer Parkposition mittig oberhalb des Rückenlehenunterteils angeordnet ist;
- Figuren 2a und 2b: schematisch eine weitere Ansicht des Nutzkraftfahrzeugsitzes in einem Sonderabstützbetriebszustand, in welchem das Rückenlehnenoberteil außermittig seitlich des Rückenlehnenunterteils in einer Abstützlage hinein verschoben angeordnet ist;
- Figur 3: schematisch eine erste Detailansicht einer ersten möglichen Gleitführungseinrichtung des Rückenlehnenoberteils in einer Ausgangsposition, bei welcher zwei übereinander und voneinander beabstandet angeordnete gekrümmte Gleitführungselemente zumindest teilweise windschief zueinander verlaufend an Gleitlagerelementehalter gelagert sind;
- Figur 4: schematisch eine zweite Detailansicht der ersten möglichen Gleitführungseinrichtung in einer seitlich weiter hinaus geschobenen Seitenposition, bei welcher die beiden Gleitführungselemente auf Höhe der Gleitlagerelementehalter bereits einen ersten Achsversatz aufweisen;
- Figur 5: schematisch eine weitere Detailansicht der ersten möglichen Gleitführungseinrichtung in einer seitlich noch weiter hinaus geschobenen Seitenposition, bei welcher die beiden Gleitführungselemente auf Höhe der Gleitlagerelementehalter einen größeren Achsversatz aufweisen;
- Figur 6: schematisch eine letzte Detailansicht der ersten möglichen Gleitführungseinrichtung in einer Endposition, bei welcher die beiden Gleitführungselemente auf Höhe der Gleitlagerelementehalter einen maximalen Achsversatz aufweisen;
- Figur 7: schematisch eine Detailansicht einer weiteren möglichen Gleitführungseinrichtung des Rückenlehnenoberteils in einer Ausgangsposition, bei welcher zwei übereinander und voneinander beabstandet angeordnete und zumindest teilweise windschief zueinander verlaufende Gleitführungselemente mehrfach gekrümmt sind;
- Figur 8: schematisch eine weitere Detailansicht der Gleitführungseinrichtung aus der Figur 7 in einer Endposition, in welcher sich das Rückenlehnenoberteil in einer Abstützlage befindet.
- Figur 9: schematisch eine Ansicht eines beispielhaft gebogenen und in einem Gleitlagerelement gelagerten Rohrgleitelements der Gleitführungseinrichtung aus den Figuren 1 bis 6;
- Figur 10: schematisch eine Detailansicht der Gleitlagerung zwischen dem gebogenen Rohrgleitelement und dem Gleitlagerelement aus der Figur 9;
- Figur 11: schematisch eine Ansicht eines beispielhaft gebogenen Rundstangengleitelements mit einem alternativen Gleitlagerelementehalter;
- Figur 12: schematisch eine Detailansicht der Gleitlagerung zwischen dem gebogenen Rundstangengleitelement und dem Gleitlagerelement aus der Figur 11;
- Figur 13: schematisch eine Ansicht eines beispielhaft gebogenen U-Profilgleitelements mit einem weiteren Gleitlagerelement;
- Figur 14: schematisch eine Detailansicht der Gleitlagerung zwischen dem gebogenen U-Profilgleitelement und dem weiteren Gleitlagerelement aus der Figur 13;
- Figur 15: schematisch eine Ansicht eines beispielhaft gebogenen Rechteckgleitelements mit einem alternativen Gleitlagerelement;
- Figur 16: schematisch eine Detailansicht der Gleitlagerung zwischen dem gebogenen Rechteckgleitelement und dem alternativen Gleitlagerelement aus der Figur 15;
- Figur 17: schematisch eine Rückansicht des mit der Gleitführungseinrichtung gleitgeführten Rückenlehnenoberteils (Figuren 2 bis 6) in der mittigen Parkposition;
- Figur 18: schematisch eine Schnittansicht der Gleitführungseinrichtung aus der Figur 17 entlang des Schnittes A-A;
- Figur 19: schematisch eine Rückansicht des halb aus der mittigen Parkposition ausgefahrenen Rückenlehnenoberteils bzw. der Gleitführungseinrichtung aus den Figuren 17 und 18; und
- Figur 20: schematisch eine Schnittansicht der Gleitführungseinrichtung aus der Figur 19 entlang des Schnittes B-B.

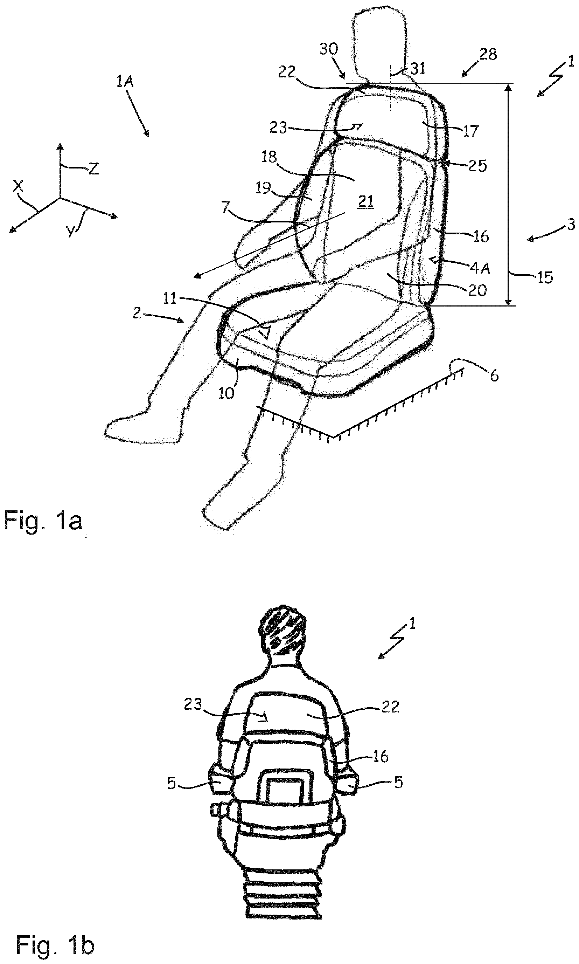

Bei dem in den Figuren 1 bis 8 gezeigten Fahrzeugsitz 1 handelt es sich um einen Nutzkraftfahrzeugsitz 1A, welcher ein Sitzteil 2 und eine Rückenlehne 3 aufweist, wobei an dem rechten Seitenrand 4A an der Rückenlehne 3 noch eine Armlehne 5 vorgesehen ist.

Der Nutzkraftfahrzeugsitz 1 A ist mit seinem Sitzteil 2 mittels eines hier nicht gezeigten Fahrzeugsitzunterteils an einer Karosserie (hier nicht gezeigt) eines Nutzkraftfahrzeugs 6 befestigt.

Das Nutzkraftfahrzeug 6 definiert eine Fahrzeuglängserstreckung X, eine Fahrzeugbreitenerstreckung Y und eine Fahrzeughöhenerstreckung Z, welche auch hinsichtlich der Orientierung des Nutzkraftfahrzeugsitzes 1 A verwendet werden können.

Insofern kann mithilfe der Fahrzeuglängserstreckung X eine Position bzw. Lageveränderung "vor" bzw. "hinter" bezüglich der Rückenlehne 3 definiert werden.

Mithilfe der Fahrzeugbreitenerstreckung Y kann eine Position bzw. Lageveränderung "seitlich" bzw. "neben" bezüglich der Rückenlehne 3 definiert werden.

Und mithilfe der Fahrzeughöhenerstreckung Z kann dementsprechend eine Position bzw. Lageveränderung "oben" bzw. "unten" bezüglich der Rückenlehne 3 definiert werden.

Hierbei ist der Nutzkraftfahrzeugsitz 1 A derart in dem Nutzkraftfahrzeug 6 angeordnet, dass die Hauptsitzrichtung 7 des Nutzkraftfahrzeugsitzes 1 A im Wesentlichen mit der Fahrzeuglängserstreckung X fluchtet.

Das Sitzteil 2 umfasst ein Sitzteilpolsterelement 10, welches die eigentliche Sitzteilfläche 11 des Sitzteils 2 ausgestaltet.

Hinsichtlich der Rückenlehne 3 verhält es sich ähnlich, wobei die Rückenlehne 3 über ihre Gesamthöhe 15 in ein Rückenlehnenunterteil 16 und ein Rückenlehnenoberteil 17 unterteilt ist. Die Gesamthöhe 15 erstreckt sich im Wesentlichen in Richtung der Fahrzeughöhenerstreckung Z.

Hierbei umfasst das Rückenlehnenunterteil 16 ein Unterteilpolsterelement 18 mit äußeren Wangenbereichen 19 und 20, sodass das Rückenlehnenunterteil 16 insgesamt eine, insbesondere stark konturierte Unterteilfläche 21 ausgestaltet.

Dementsprechend umfasst das Rückenlehnenoberteil 17 ein Oberteilpolsterelement 22, welches jedoch eine, insbesondere glatte Oberteilfläche 23 ausgestaltet.

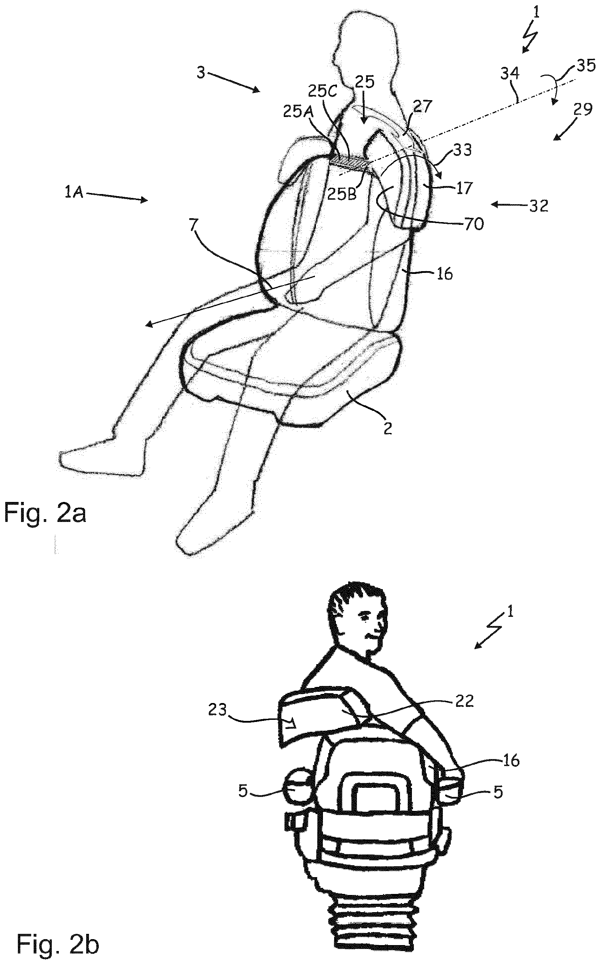

Darüber hinaus umfasst der Nutzkraftfahrzeugsitz 1A eine Haltevorrichtung 25 (siehe insbesondere ab Figuren 2a, 2b), mittels welcher das Rückenlehnenoberteil 17 gegenüber dem Rückenlehnenunterteil 16 verlagerbar an der Rückenlehne 3 gehaltert ist.

Die Haltevorrichtung 25 ist hierbei mittels nur schematisch angedeuteter Haltebügelelemente 25A und 25B, welche mit einem Halteplattenelement 25C untereinander starr verbunden sind, in entsprechend in dem Rückenlehnenunterteil 16 eingelassenen Haltebuchsen (hier nicht gezeigt) lösbar festgelegt.

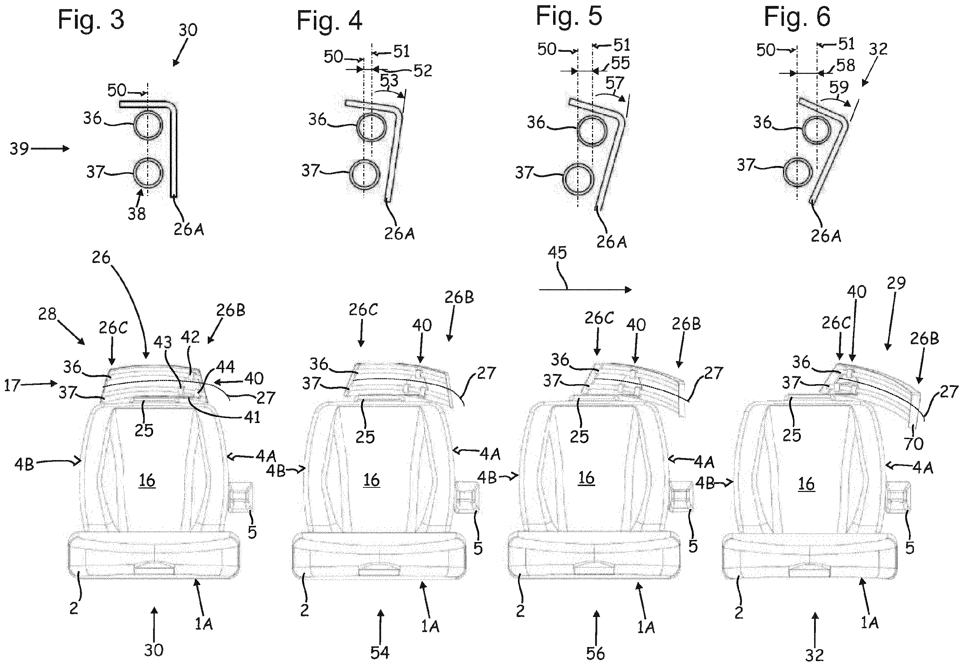

Diese derart ausgestaltete Haltevorrichtung 25 weist die erfindungsgemäße Gleitführungseinrichtung 26 (siehe ab Figur 3) auf, die derart ausgestaltet ist, dass das Rückenlehnenoberteil 17 entlang einer fiktiven Verlagerungskurve 27 seitlich über wenigstens einen Seitenrand 4 des Rückenlehnenunterteils 16 bzw. der Rückenlehne 3 linearverschieblich verlagerbar ist, während das Rückenlehnenunterteil 16 gegenüber dem Sitzteil 2 ortsfest ist.

Insofern stellt das Rückenlehnenoberteil 17 den gegenüber dem Sitzteil 2 seitlich verschieblichen Teil der Rückenlehne 3 dar, während das Rückenlehnenunterteil 16 den gegenüber dem Sitzteil 2 ortsfesten Teil der Rückenlehne 3 darstellt.

Hierdurch kann das Rückenlehnenoberteil 17 aus einer mittigen Parkposition 28 (siehe Figuren 1a, 1b, 3 und auch 7) heraus entlang der Verlagerungskurve 27 in eine außermittige Abstützlage 29 (siehe Figuren 2a, 2b, 6 und auch 8) hinein verlagert bzw. geschoben werden.

Da die Gesamthöhe 15 in Richtung der Fahrzeughöhenerstreckung Z verläuft, ist klar, dass das Rückenlehnenoberteil 17 zumindest in der mittigen Parkposition 28 vollständig über dem Rückenlehnenunterteil 16, das heißt oberhalb des Rückenlehnenunterteils 16, positioniert ist, sodass der Fahrzeugführer in diesem Normalbetriebszustand in Hauptsitzrichtung 7 bequem auf dem Nutzkraftfahrzeugsitz 1A Platz nehmen kann.

Die fiktive Verlagerungskurve 27 verläuft hierbei quer zur Hauptsitzrichtung 7 bzw. zur Fahrzeuglängserstreckung X. Insofern erstreckt sich die fiktive Verlagerungskurve 27 im Wesentlichen in Fahrzeugbreitenerstreckung Y.

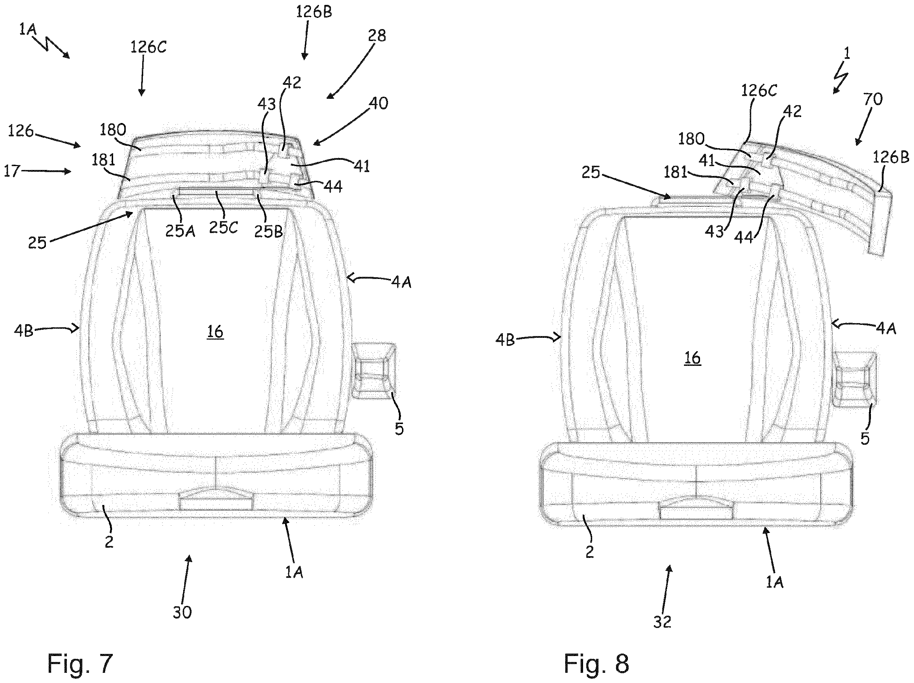

In der mittigen Parkposition 28 des Rückenlehnenoberteils 17 befindet sich die Gleitführungseinrichtung 26 bzw. entsprechende Bauteile hiervon in einer Ausgangslage 30 (siehe auch Figuren 3 bzw. 7).

Diese mittige Parkposition 28 bzw. diese Ausgangslage 30 definieren sich dadurch, dass einerseits das Rückenlehnenoberteil 17 bzw. andererseits die Gleitführungseinrichtung 26 sich mittig in Bezug auf eine vertikale Mittelachse 31 der Rückenlehne 3 befinden. Die vertikale Mittelachse 31 erstreckt sich im Wesentlichen in Richtung der Fahrzeughöhenerstreckung Z. Insofern befindet sich die mittige Parkposition 28 mittig zwischen den beiden Seitenrändern 4A und 4B.

Hinsichtlich der außermittigen Abstützlage 29 des Rückenlehnenoberteils 17 befindet sich die Gleitführungseinrichtung 26 in einer seitlichen außermittigen Endlage 32 (siehe insbesondere Figuren 2a, 2b und 6), wobei sich diese seitliche außermittige Endlage 32 rechts neben der vertikalen Mittelachse 31 und damit auch zumindest teilweise rechts neben der rechten Seitenwand 4A des Rückenlehnenunterteils 16 befindet.

Es versteht sich, dass bei entsprechend ausgestalteter Gleitführungseinrichtung 26 die seitliche außermittige Endlage 32 auch links neben der vertikalen Mittelachse 31 und damit auch zumindest teilweise links neben der linken Seitenwand 4B des Rückenlehnenunterteils 16 angeordnet sein kann.

Die Gleitführungseinrichtung 26 ist in diesem Ausführungsbeispiel vollständig innerhalb des Rückenlehnenoberteils 17 untergebracht bzw. von dem Rückenlehnenoberteil 17 zumindest teilweise verdeckt, sodass sie nach den Darstellungen gemäß der Figuren 1a, 1b und 2a, 2b auch nicht explizit dargestellt ist.

Das Rückenlehnenoberteil 17 ist mittels der erfindungsgemäßen Gleitführungseinrichtung 26 nicht nur linearverschieblich über den rechten Seitenrand 4A des Rückenlehnenunterteils 16 linearverschieblich verlagerbar, sondern darüber hinaus auch noch nach hinten bezüglich der Rückenlehne 3 bzw. nach unten bezüglich der Rückenlehne 3 neigbar, wenn das Rückenlehnenoberteil 17 entlang der fiktiven Verlagerungskurve 27 verschoben wird.

Insofern ist das Rückenlehnenoberteil 17 in diesem Ausführungsbeispiel beim seitlichen Verlagern zusätzlich um die fiktive Verlagerungskurve 27 in eine erste Neigungsrichtung 33 drehbar und/oder um eine quer zu der Verlagerungskurve 27 verlaufende Querachse 34 in eine zweite Neigungsrichtung 35 drehbar.

Um eine solche mehrfach geneigte Lageänderung des Rückenlehnenoberteils 17 konstruktiv einfach derart zu bewerkstelligen, dass die Gleitführungseinrichtung 26 kompakt und idealerweise vollständig in das Rückenlehnenoberteil 17 integriert werden kann, ist die Gleitführungseinrichtung 26 zumindest teilweise helixförmig ausgestaltet.

In diesem konkreten ersten Ausführungsbeispiel ist der Effekt einer helixförmig ausgestalteten Gleitführungseinrichtung 26 baulich einfach dadurch erzielt, dass die Gleitführungseinrichtung 26 zwei nebeneinander und voneinander beabstandet angeordnete Gleitführungselemente 36 und 37 in Gestalt von Rohrgleitelementen 38 (hier nur exemplarisch beziffert) aufweist, wobei die beiden Gleitführungselemente 36 und 37 zumindest teilweise zueinander windschief angeordnet sind, wenn sie nicht bereichsweise parallel zueinander verlaufen.

Das heißt, dass eines der Gleitführungselemente 36 bzw. 37 im Verlauf der fiktiven Verlagerungskurve 27 gegenüber dem anderen der Gleitführungselemente 36 bzw. 37 verschieden innerhalb eines Gehäuseelements 26A der Gleitführungseinrichtung 26 (siehe insbesondere ab Fig. 3) angeordnet ist.

Die beiden Gleitführungselemente 36 und 37 sind in diesem Ausführungsbeispiel an einem ersten Ende 26B der Gleitführungseinrichtung 26 somit parallel verlaufend zueinander angeordnet, während sie in Richtung eines zweiten Endes 26C windschief verlaufend zueinander angeordnet sind, wie besonders gut in den einzelnen Schnittdarstellungen 39 der jeweiligen oberen Teildarstellungen der Figuren 3 bis 6 zu sehen ist.

Die beiden Gleitführungselemente 36 und 37 definieren hierbei die fiktive Verlagerungskurve 27, welche sich vorliegend fiktiv zwischen den beiden Gleitführungselementen 36 und 37 erstreckt.

Hierbei sind die Gleitführungselemente 36 und 37 derart gekrümmt ausgeführt, dass die fiktive Verlagerungskurve 27 einmal gekrümmt ist, wodurch das Rückenlehnenoberteil 17 einer Bahnkurve folgt, wenn es entlang der einmal gebogenen fiktiven Verlagerungskurve 27 verschoben wird.

Neben den beiden Gleitführungselementen 36 und 37 umfasst die Gleitführungseinrichtung 26 noch eine Halteeinrichtung 40, welche an der Haltevorrichtung 25 des Nutzkraftfahrzeugsitzes 1 A befestigt ist.

Genauer gesagt, ist diese Halteeinrichtung 40 an dem Halteplattenelement 25C ortsfest angebracht.

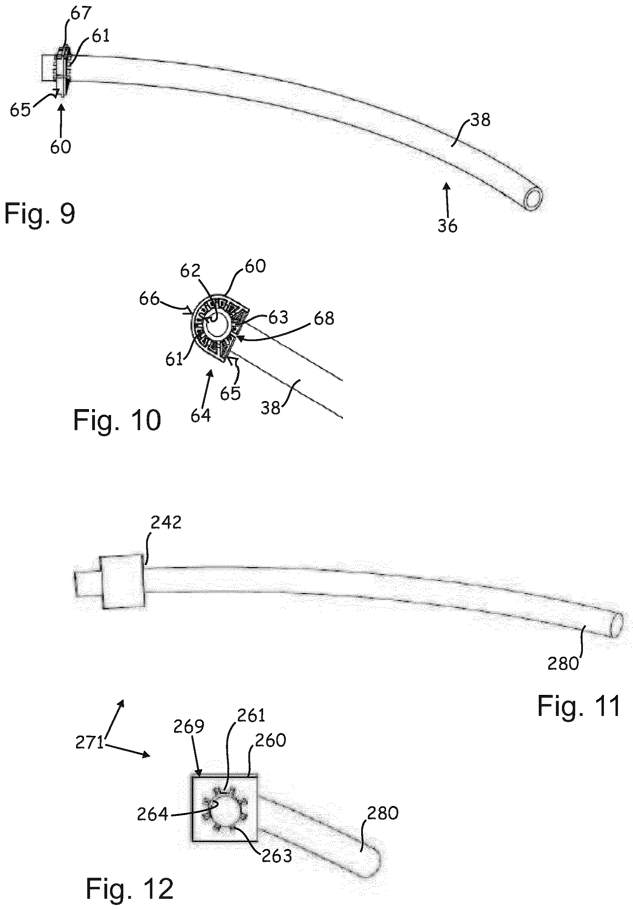

Diese Halteeinrichtung 40 besteht in diesem Ausführungsbeispiel aus einem deltaförmig ausgestalteten Halteblechelement 41, an welchen wiederum drei Gleitlagerelementehalter 42, 43 und 44 zum Haltern von Gleitlagerelementen 60 in Gestalt von Lagerbuchsen 64 (siehe beispielsweise Figuren 9 und 10) befestigt sind.

Das deltaförmig ausgestalteten Halteblechelement 41 ist hierbei mit dem Halteplattenelement 25C stoffschlüssig verbunden, vorzugsweise verschweißt. Eine gleichwertige Verbindung kann alternativ auch mittels einer Schraub-, oder Nietverbindung oder dergleichen begründet sein.

In diesem Ausführungsbeispiel ist die Halteeinrichtung 40 also starr mit der Haltevorrichtung 25 verbunden. Ebenso sind die drei Gleitlagerelementehalter 42, 43 und 44 an dem Halteblechelement 41 der Halteeinrichtung 40 ortsfest festgelegt. Hierdurch ergibt sich insgesamt eine robuste und dauerfeste Befestigung des Rückenlehnenoberteils 17 gegenüber dem Rückenlehnenunterteil 16.

Durch das deltaförmig ausgestaltete Halteblechelement 41 kann die Halteeinrichtung 40 insgesamt kompakter gebaut werden und es ist darüber hinaus möglich, das erste Gleitführungselement 36 lediglich mit dem ersten Gleitlagerelementehalter 42, und das zweite Gleitführungselement 37 sowohl mit dem zweiten Gleitlagerelementehalter 43 als auch mit dem dritten Gleitlagerelementehalter 44 derart wirkzuverbinden, dass die beiden Gleitführungselemente 36 und 37 innerhalb der Gleitlagerelemente 60 der Gleitlagerelementehalter 42 bzw. 43 und 44 entlang der fiktiven Verlagerungskurve 27 erfindungsgemäß in Verschieberichtung 45 gleitend verschoben werden können.

Vorteilhafterweise sind diese Gleitlagerelementehalter 42, 43 und 44 derart ausgestaltet, dass sie mithilfe des Halteblechelements 41 der Halteeinrichtung 40 und der Haltevorrichtung 25 an dem Rückenlehnenunterteil 16 angeordnet sind, und an welchen gleichzeitig die als Rohrgleitelemente 38 ausgestalteten Gleitführungselemente 36 und 37 quer zur Hauptsitzrichtung 7 in Richtung der fiktiven Verlagerungskurve 27 geführt sind.

Nach der Darstellung gemäß der Figur 3 befindet sich die Gleitführungseinrichtung 26 noch in der Ausgangslage 30 (vgl. Figur 1a, 1b), bei welcher sich das Rückenlehnenoberteil 17 in der mittigen Parkposition 28 befindet. Wie insbesondere nach der oberen Schnittdarstellung 39 der Figur 3 auf Höhe der Halteeinrichtung 40 gut zu erkennen ist, sind die beiden Gleitführungselemente 36 und 37 im Bereich des ersten Endes 26B der Gleitführungseinrichtung 26 gemeinsam zentrisch in einer Vertikalebene 50 parallel zueinander angeordnet. Insofern ist das Rückenlehnenoberteil 17 noch nicht im Sinne der Erfindung nach hinten bzw. nach unten geneigt angeordnet.

Im weiteren Verlauf der beiden Gleitführungselemente 36 und 37 auf das zweite Ende 26B der Gleitführungseinrichtung 26 zu, liegt das erste Gleitführungselement 36 jedoch schon nicht mehr mit dem zweiten Gleitführungselement 37 zentrisch in der gemeinsamen Vertikalebene 50, sondern es ist zentrisch in einer Vertikalparallelebene 51 angeordnet, sodass zwischen den beiden Gleitführungselementen 36 und 37 ein erster Achsversatz 52 besteht, wie aus der oberen Schnittdarstellung 39 der Figur 4 auf Höhe der Halteeinrichtung 40 gut zu erkennen ist.

Da die beiden Gleitführungselemente 36 und 37 fest in dem Gehäuseelement 26A verbaut sind, hat dies den Effekt, dass das Rückenlehnenoberteil 17 gemäß einem ersten Neigungswinkel 53 in die erste Neigungsrichtung 33 (siehe Figur 2a, 2b) nach hinten geneigt wird, wenn das Rückenlehnenoberteil 17 in Verschieberichtung 45 seitlich entlang der fiktiven Verlagerungskurve 27 bewegt wird (vgl. Figur 4). Gleichzeitig neigt sich das Rückenlehnenoberteil 17 in dieser ersten dargestellten Zwischenlage 54 aufgrund der etwas schräg angeordneten Halteeinrichtung 40 und der Krümmung der Gleitführungselemente 36 und 37 nach unten in die zweite Neigungsrichtung 35 um die Querachse 34 (siehe auch Figur 2).

Dieser Effekt verstärkt sich umso mehr das Rückenlehnenoberteil 17 in Richtung seiner außermittigen Abstützlage 29 bzw. die Gleitführungseinrichtung 26 in Ihre Endlage 32 (siehe Figur 6) bewegt wird, da der Achsversatz zwischen den beiden Gleitführungselementen 36 und 37 im Verlauf auf das zweite Ende 26B zu stetig zunimmt, wie beispielsweise nach der Darstellung gemäß der Figur 5 mit einem größeren Achsversatz 55 gut verdeutlicht ist.

Dementsprechend vergrößert sich in dieser zweiten Zwischenlage 56 auch der erste Neigungswinkel 53 zu einem größeren Neigungswinkel 57 (siehe Schnittdarstellung 39, Figur 5), und weiter bis die beiden Gleitführungselemente 36 und 37 an ihr zweites Ende 26B in Verschieberichtung 45 durch die entsprechenden Gleitlagerelementehalter 42, 43 und 44 hindurch geschoben sind, und sich die Gleitführungseinrichtung 26 letztendlich in ihrer Endlage 32 bzw. das Rückenlehnenoberteil 17 in ihrer außermittigen Abstützlage 29 befinden.

In dieser Endlage 32 können nun ein maximaler Achsversatz 58 und dementsprechend ein maximaler Neigungswinkel 59 ausgenutzt werden, um das Rückenlehnenoberteil 17 als maximal heraus geschobene und entsprechend positionierte Fahrzeugführerrumpfabstützeinrichtung 70 vollständig als zusätzliche Abstützfläche nutzen zu können.

Insofern kann das Rückenlehnenoberteil 17, sobald es insbesondere vollständig in seine außermittigen Abstützlage 29 (vgl. Figuren 2a, 2b und 6) hinein verlagert wurde, auch vollständig als zusätzliche Fahrzeugführerrumpfabstützeinrichtung 70 fungieren, wodurch der Sitzkomfort des Fahrzeugführers entsprechend erhöht ist.

Während hinsichtlich des ersten Ausführungsbeispiels die beiden Gleitführungselemente 36 und 37 hinsichtlich der ersten in den Figuren 3 bis 4 detailliert gezeigten Gleitführungseinrichtung 26 als Rohrgleitelemente 28 noch eine einfache Krümmung aufweisen, sind in diesem weiteren Ausführungsbeispiel entsprechende Rundstangengleitelemente 180 und 181 einer in den Figuren 7 und 8 gezeigten alternativen Gleitführungseinrichtung 126 mehrfach gekrümmt, sodass das Rückenlehnenoberteil 17 einer mehrfach gekrümmten fiktiven Verlagerungskurve (hier nicht explizit eingezeichnet) folgen kann. Hierdurch ist es möglich, dass das Rückenlehnenoberteil 17 beim Verlagern zwischen der mittigen Parkposition 28 (siehe Figur 7) und der außermittigen Abstützlage 29 (siehe Figur 8) vorteilhafterweise gegebenenfalls noch Hindernisse (hier nicht gezeigt) umfahren kann.

Ansonsten entspricht der in den Figuren 7 und 8 gezeigte Nutzkraftfahrzeugsitz 1A den zuvor in den Figuren 1 bis 6 bereits beschriebenen Aufbau, sodass auf die diesbezügliche Beschreibung verwiesen wird, um Wiederholungen zu vermeiden.

Bei dem in den Figuren 9 und 10 beispielhaft gezeigten gebogenen Rohrgleitelement 38 handelt es sich um eines der Gleitführungselemente 36 oder 37. Das Rohrgleitelement 38 ist in einem Gleitlagerelement 60 verschieblich gleitgelagert (kann auch umgekehrt sein), sodass hierdurch eine Rundführungslagerung entsteht.

Ein derartiges Gleitlagerelement 60 ist jeweils in den zuvor beschriebenen Gleitlagerelementehaltern 42, 43 und 44 eingepresst.

Das Gleitlagerelement 60 ist hierbei mit einzelnen elastischen Lagerarmelementen 61 ausgestattet, welche konzentrisch um das Rohrgleitelement 38 herum angeordnet sind. Hierdurch kann einerseits die Gefahr eines Verkantens des Rohrgleitelements 38 innerhalb des Gleitlagerelements 60 verringert werden, wodurch ein Verschieben des Rückenlehnenoberteils 17 entlang der fiktiven Verlagerungskurve 27 einfacher und betriebssicherer erfolgen kann.

Durch diese einzelnen vorzugsweise elastischen Lagerarmelemente 61 steht das Gleitlagerelement 60 mit dem Rohrgleitelement 38 zudem vorteilhafterweise nur mit einer reduzierten Kontaktfläche 62 in Wirkkontakt, wodurch sich die Reibung zwischen diesen beiden Komponenten reduziert. Dies hat den weiteren Vorteil, dass das Rohrgleitelement 38 leichter gegenüber dem Gleitlagerelement 60 bewegt werden kann. Insbesondere wird hierdurch ein Anfangswiderstand herabgesetzt, sodass Rückenlehnenoberteil 17 leichter in Bewegung versetzt werden kann, was insbesondere eine manuelle Bedienung des Rückenlehnenoberteils 17 erleichtert.

Die einzelnen Lagerarmelemente 61 sind hierbei durch Materialausnehmungen 63 an dem Gleitlagerelement 60 konzentrisch um der Rohrgleitelement 38 voneinander beanstandet und gestalten somit eine entsprechende Gleitlagerbuchse 64 aus.

Des Weiteren besitzt das Gleitlagerelement 60 in Umfangsrichtung gesehen eine veränderliche Umfangsgeometrie, wobei es einen gerade ausgebildeten Umfangsseitenbereich 65 und einen gebogen ausgebildeten Umfangsseitenbereich 66 aufweist.

An dem gebogenen Umfangsseitenbereich 66 ist ein Federelement 67 vorgesehen, welches mit einer Nut am Gleitlagerelementehalter 42, 43 oder 44 korrespondieren kann, wenn das Gleitlagerelement 60 dort in einen entsprechenden Lagersitz (hier nicht gezeigt) eingesteckt wird.

An dem geraden Umfangsseitenbereich 65 ist noch ein Montageschlitz 68 vorgesehen, um das Gleitlagerelement 60 bei der Montage oder Demontage leichter in den Lagersitz einbringen bzw. aus dem Lagersitz entnehmen zu können.

Bei der in den Figuren 11 und 12 gezeigten alternativen Baugruppe 271 ist ein einfach gebogenes Rundstangengleitelement 280 aus einem Vollmaterial in einem anderen Gleitlagerelement 260, welches in einem Gleitlagerelementehalter 242 gehaltert ist, gelagert, wodurch wieder eine Rundführungslagerung gewährleistet werden kann.

Das Gleitlagerelement 260 weist einen quadratischen, plattenförmigen Grundkörper 269 auf, der zentrisch eine Gleitlagerbuchse 264 ausformt, wobei der plattenförmige Grundkörper 269 an der Gleitlagerbuchse 264 einige konzentrisch an der Gleitlagerbuchse 264 vorgesehene Materialausnehmungen 263 aufweist, sodass auch das Gleitlagerelement 260 einzelne elastische Lagerarmelemente 261 aufweist. Insofern sind auch an dem Gleitlagerelement 260 einerseits eine elastische Lagerung des einfach gebogenen Rundstangengleitelements 280 sowie andererseits eine Reibflächenreduzierung erzielt, wo vorstehend bereits erläutert.

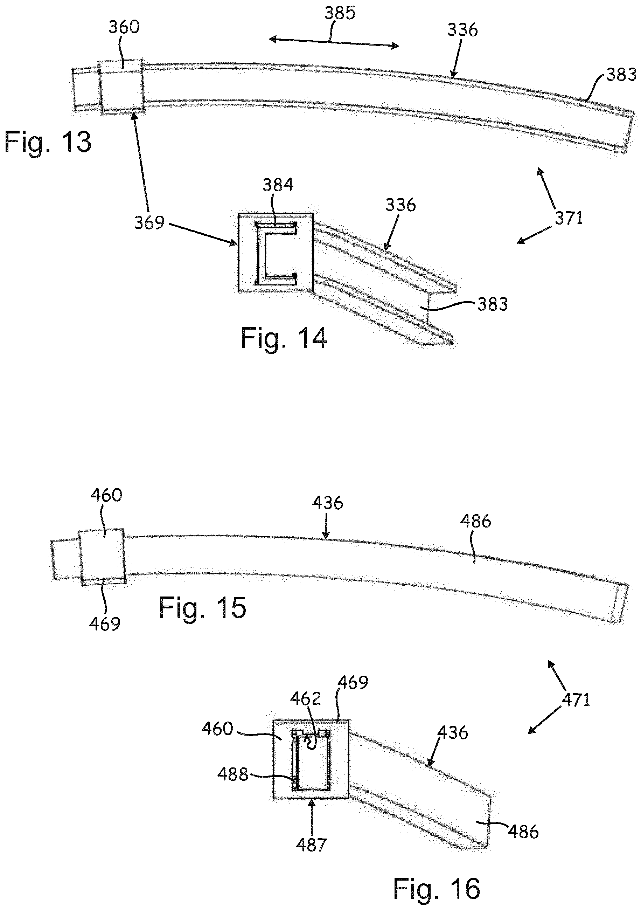

Bei der in den Figuren 13 und 14 gezeigten weiteren Baugruppe 371 ist ein gebogenes U-Profilgleitelement 383 mit einem entsprechend ausgestalteten Gleitlagerelement 360 vorgesehen und dementsprechend ist eine Profilführungslagerung realisiert.

Gegenüber den vorstehend gezeigten Rundführungslagerungen liegt bei dieser Profilführungslagerung ein weiterer Vorteil darin, dass das U-Profilgleitelement 383 zusätzlich noch verdrehgesichert in dem Gleitlagerelement 360 gleitgeführt ist.

Das Gleitlagerelement 360 weist hierbei einen rechteckig ausgebildeten Grundkörper 369 auf, in welchem ein u-förmiger Gleitlagerschlitz 384 ausgearbeitet ist.

Entlang seiner Längserstreckung 385 ist das U-Profilgleitelement 383 noch in sich verdreht, um den eingangs beschriebenen helixförmigen Effekt auch mit nur einem einzigen Gleitführungselement 336 erzielen zu können, wenn das Rückenlehnenoberteil 17 entlang der Verlagerungskurve 27 verschoben wird.

Das U-Profilgleitelement 383 kann hierbei aus einem Blechmaterial oder aus einem Kunststoffmaterial hergestellt sein.

Hinsichtlich der in den Figuren 15 und 16 gezeigten anderen Baugruppe 471 ist ein anderes Gleitführungselement 436 als Rechteckgleitelement 486 aus einem Vollmaterial in einem alternativen Gleitlagerelement 460 mit einer Rechtecklagerbuchse 487 gleitgelagert, wodurch eine Flachführungslagerung realisiert ist. Das Gleitlagerelement 460 besitzt einen rechteckigen Grundkörper 469.

Die Rechtecklagerbuchse 487 ist mit Lagerstegen 488 (nur exemplarisch beziffert) ausgestattet, welche eine reduzierte Kontaktfläche 462 zwischen dem Rechteckgleitelement 486 und dem Gleitlagerelement 460 definiert.

Durch die Rechtecklagerbuchse 487 ist das Rechteckgleitelement 486 verdrehgesichert in dem Gleitlagerelement 460 gleitgeführt.

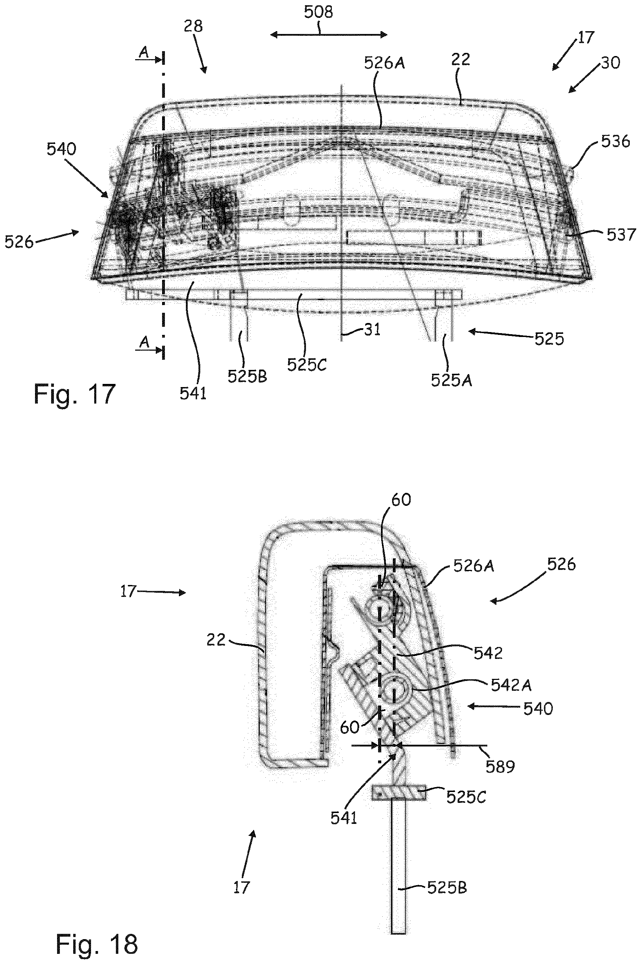

Das in den Figuren 17 bis 20 nochmals gezeigte Rückenlehnenoberteil 17 ist in diesem weiteren Ausführungsbeispiel mit einer weiteren möglichen Gleitführungseinrichtung 526 gegenüber dem Rückenlehnenunterteil 16 gleitgelagert. Und zwar ist die Gleitführungseinrichtung 526 mithilfe einer Haltevorrichtung 525 mittels zweier Haltebügelelemente 525A und 525B direkt an dem Rückenlehnenunterteil 16 befestigt. Die zwei Haltebügelelemente 525A und 525B sind über ein Halteplattenelement 525C miteinander verbunden.

Das Rückenlehnenoberteil 17 ist nach der Darstellung gemäß der Figur 17 hinsichtlich seiner Breitenerstreckung 508 noch mittig zu der Vertikalmittelachse 31 (siehe auch Figur 1) angeordnet, sodass sich das Rückenlehnenoberteil 17 in einer mittigen Parkposition 28 (siehe Figuren 1, 3 oder 7) oberhalb des Rückenlehnenunterteils 16 platzieren lässt.

Nach der Darstellung der Figur 18 ist das Oberpolsterelement 22 des Rückenlehnenoberteils 17 gut erkennbar, welches an einem Gehäuseelement 526A der Gleitführungseinrichtung 526 formschlüssig angeordnet ist.

Die Gleitführungseinrichtung 526 umfasst eine Halteeinrichtung 540, welche mit einem Halteblechelement 541 oberseitig an dem Halteplattenelement 525C angebracht ist.

An diesem Halteblechelement 541 ist auch noch ein Gleitlagerelementehalter 542 angeordnet, in welchem insgesamt drei der in den Figuren 9 und 10 gezeigten und beschriebenen Gleitlagerelemente 60 in drei entsprechend ausgebildeten Lagersitzen 542A (nur exemplarisch beziffert) eingesetzt sind.

In den Gleitlagerelementen 60 sind zwei Gleitführungselemente 536 und 537 gelagert, wobei das Gleitführungselement 536 lediglich in einem einzigen der Gleitlagerelemente 60 und das Gleitführungselement 537 in den zwei anderen der Gleitlagerelemente 60 entlang der Verlagerungskurve 27 (siehe Figuren 3 bis 6) gleitverschieblich gelagert sind.

Hierbei ist das Halteblechelement 541 leicht gekippt in der Gleitführungseinrichtung 526 angeordnet, sodass die zwei Gleitführungselemente 536 und 537 bei der in der Ausgangslage 30 platzierten Gleitführungseinrichtung 526 bereits mit einem kleinen Anfangsachsversatz 589 zueinander angeordnet sind.

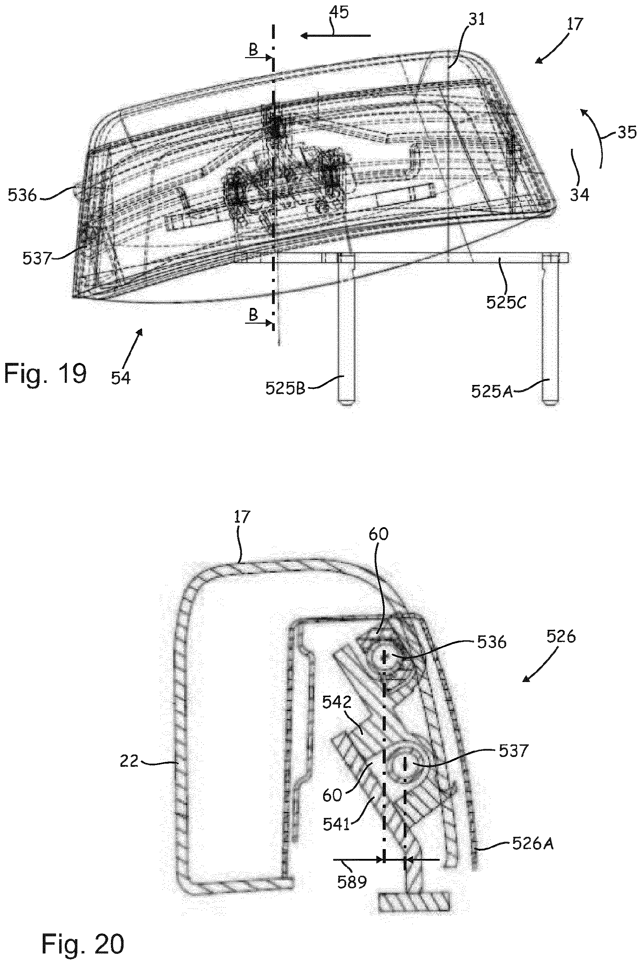

Hinsichtlich der in den Figuren 19 und 20 gezeigten Gleitführungseinrichtung 526 ist das Rückenlehnenoberteil 17 bereits in Verschieberichtung 45 entlang der Verlagerungskurve 27 verschoben, wobei das Rückenlehnenoberteil 17 aufgrund der Krümmung der zwei Gleitführungselemente 536 und 537 in die zweite Neigungsrichtung 35 um die Querachse 34 (siehe Figur 2) gedreht ist.

In dieser ersten Zwischenlage 54 (vgl. auch Figur 4) ist der Anfangsachsversatz 589 zwischen den zwei Gleitführungselemente 536 und 537 immer noch unverändert. Dementsprechend ist auch das Rückenlehnenoberteil 17 noch nicht in die erste Neigungsrichtung 33 (vgl. Figur 2) geneigt.

Es versteht sich, dass es sich bei den vorstehend erläuterten Ausführungsbeispielen lediglich um erste Ausgestaltungen des erfindungsgemäßen Fahrzeugsitzes bzw. von Gleitführungseinrichtungen und deren Komponenten handelt. Insofern beschränkt sich die Ausgestaltung der Erfindung nicht auf diese Ausführungsbeispiele.

### Bezugszeichenliste

- 1: Fahrzeugsitz
- 1A: Nutzfahrzeugsitz
- 2: Sitzteil
- 3: Rückenlehne
- 4: rechter Seitenrand
- 5: Armlehne
- 6: Nutzkraftfahrzeug
- 7: Hauptsitzrichtung
- 10: Sitzteilpolsterelement
- 11: Sitzteilfläche
- 15: Gesamthöhe
- 16: Rückenlehnenunterteil
- 17: Rückenlehnenoberteil
- 18: Unterteilpolsterelement
- 19: erster äußerer Wangenbereich
- 20: zweiter äußerer Wangenbereich
- 21: konturierte Unterteilfläche
- 22: Oberteilpolsterelement
- 23: glatte Oberfläche
- 25: Haltevorrichtung
- 25A: erstes Haltebügelelement
- 25B: zweites Haltebügelelement
- 25C: Halteplattenelement
- 26: Gleitführungseinrichtung
- 26A: Gehäuseelement
- 26B: erste Ende
- 26C: zweites Ende
- 27: fiktive Verlagerungskurve
- 28: mittige Parkposition
- 29: außermittige Abstützlage
- 30: Ausgangslage
- 31: Vertikalmittelachse
- 32: Endlage
- 33: erste Neigungsrichtung
- 34: Querachse
- 35: zweite Neigungsrichtung
- 36: erstes Gleitführungselement
- 37: zweites Gleitführungselement
- 38: Rohrgleitelement
- 39: Schnittdarstellungen
- 40: Halteeinrichtung
- 41: Halteblechelement
- 42: erster Gleitlagerelementehalter
- 43: zweiter Gleitlagerelementehalter
- 44: dritter Gleitlagerelementehalter
- 45: Verschieberichtung
- 50: gemeinsame Vertikalebene
- 51: Vertikalparallelebene
- 52: erster Achsversatz
- 53: erster Neigungswinkel
- 54: erste Zwischenlage
- 55: größerer Achsversatz
- 56: zweite Zwischenlage
- 57: größerer Neigungswinkel
- 58: maximaler Achsversatz
- 59: maximaler Neigungswinkel
- 60: Gleitlagerelemente
- 61: elastische Lagerarmelemente
- 62: reduzierte Kontaktfläche
- 63: Materialausnehmungen
- 64: Gleitlagerbuchse
- 65: gerader Umfangsseitenbereich
- 66: gebogener Umfangsseitenbereich
- 67: Federelement
- 68: Montageschlitz
- 70: Fahrzeugführerrumpfabstützeinrichtung

- 126: alternative Linearführungseinrichtung
- 126B: erste Ende
- 126C: zweites Ende
- 180: erstes Rundstangengleitelement
- 181: zweites Rundstangengleitelement

- 242: Gleitlagerelementehalter
- 260: anderes Gleitlagerelement
- 261: elastische Lagerarmelemente
- 263: Materialausnehmungen
- 264: Gleitlagerbuchse
- 269: plattenförmiger Grundkörper
- 271: Baugruppe
- 280: einfach gebogenes Rundstangengleitelement

- 336: einziges Gleitführungselement
- 371: weitere Baugruppe
- 383: U-Profilgleitelement
- 360: Gleitlagerelement
- 369: rechteckig ausgebildeter Grundkörper
- 384: u-förmiger Gleitlagerschlitz
- 385: Längserstreckung

- 436: anderes Gleitführungselement
- 460: alternatives Gleitlagerelement
- 462: reduzierte Kontaktfläche
- 469: rechteckiger Grundkörper
- 471: andere Baugruppe
- 486: Rechteckgleitelement
- 487: Rechtecklagerbuchse
- 488: Lagerstege

- 508: Breitenerstreckung
- 525: Haltevorrichtung
- 525A: erstes Haltebügelelement
- 525B: zweites Haltebügelelement
- 525C: Halteplattenelement
- 526: Gleitführungseinrichtung
- 526A: Gehäuseelement
- 536: erstes Gleitführungselement
- 537: zweites Gleitführungselement
- 540: Halteeinrichtung
- 541: Halteblechelement
- 542: erster Gleitlagerelementehalter
- 542A: Lagersitze

## Patentansprüche

1. Fahrzeugsitz (1), insbesondere Nutzkraftfahrzeugsitz (1 A), mit einem Sitzteil (2), mit einer Rückenlehne (3) umfassend ein Rückenlehnenunterteil (16) und ein Rückenlehnenoberteil (17), und mit einer Haltevorrichtung (25), mittels welcher das Rückenlehnenoberteil (17) gegenüber dem Rückenlehnenunterteil (16) verlagerbar gehaltert ist, wobei
die Haltevorrichtung (25) eine Gleitführungseinrichtung (26; 126; 526) aufweist, mittels welcher das Rückenlehnenoberteil (17) gegenüber dem Rückenlehnenunterteil (16) entlang einer Verlagerungskurve (27) verschieblich angeordnet ist, um das Rückenlehnenoberteil (17) zumindest teilweise in Richtung des Seitenrandes (4A, 4B) des Rückenlehnenunterteils (16) verschieblich zu lagern
**dadurch gekennzeichnet, dass**
wenigstens ein Gleitführungselement (36, 37; 336; 436, 536, 537) der Gleitführungseinrichtung elastische Lagerarmelemente (61; 261) oder feste Lagerstege (488) aufweist, welche eine Gleitbuchse (64; 264; 487) ausgestalten.

2. Fahrzeugsitz (1) nach Anspruch 1,
**dadurch gekennzeichnet, dass**
die Gleitführungseinrichtung (26; 126; 526) derart ausgestaltet ist, dass das Rückenlehnenoberteil (17) beim seitlichen Verlagern zusätzlich um die Verlagerungskurve (27) und/oder um eine in einem Winkel zu der Verlagerungskurve (27) verlaufende Achse, vorzugsweise um eine quer zu der Verlagerungskurve (27) verlaufende Querachse (35) dreht.

3. Fahrzeugsitz (1) nach Anspruch 1 oder 2,
**dadurch gekennzeichnet, dass**
die Gleitführungseinrichtung (26; 126; 526) zumindest teilweise helixförmig ausgestaltet ist.

4. Fahrzeugsitz (1) nach einem der Ansprüche 1 bis 3,
**dadurch gekennzeichnet, dass**
das wenigstens eine Gleitführungselement (36, 37, 336, 436, 536, 537) der Gleitführungseinrichtung (26; 126; 526) in einem Gleitlagerelement (60; 360; 460) gleitgeführt ist.

5. Fahrzeugsitz (1) nach einem der Ansprüche 1 bis 4,
**dadurch gekennzeichnet, dass**
das wenigstens eine Gleitführungselement (36, 37; 336; 436, 536, 537) durch Materialausnehmungen (63; 263) an seiner Gleitinnenseite eine Gleitbuchse (64; 264; 487) mit einer reduzierten Gleitfläche (62; 462) aufweist.

6. Fahrzeugsitz (1) nach einem der Ansprüche 1 bis 5,
**dadurch gekennzeichnet, dass**
die Gleitführungseinrichtung (26; 126; 526) einen Gleitlagerelementehalter (42, 43, 44; 542) aufweist, mittels welchem wenigstens zwei Gleitlagerelemente (60; 360; 460) übereinander angeordnet gehaltert sind.

7. Fahrzeugsitz (1) nach einem der Ansprüche 1 bis 6,
**dadurch gekennzeichnet, dass**
die Gleitführungseinrichtung (26; 126; 526) einen einzigen Gleitlagerelementehalter (542) aufweist, in welchem alle Gleitlagerelement (60; 360; 460) innerhalb des Rückenlehnenoberteils (17) angeordnet sind.

8. Nutzkraftfahrzeug (6), insbesondere landwirtschaftliches Nutzkraftfahrzeug, mit wenigstens einem Fahrzeugsitz (1),
**gekennzeichnet, durch**
einen Fahrzeugsitz (1) nach einem der vorhergehenden Ansprüche.

## Claims

1. Vehicle seat (1), in particular a commercial motor vehicle seat (1 A), comprising a seat part (2), a backrest (3) comprising a lower backrest part (16) and an upper backrest part (17), and a holding apparatus (25), by means of which the upper backrest part (17) is held displaceably with respect to the lower backrest part (16), the holding apparatus (25) having a sliding guide device (26; 126; 526), by means of which the upper backrest part (17) is arranged displaceably with respect to the lower backrest part (16) along a displacement curve (27) so as to displaceably mount the upper backrest part (17), at least in part, in the direction of the side edge (4A, 4B) of the lower backrest part (16),
**characterised in that**
at least one sliding guide element (36, 37; 336; 436, 536, 537) of the sliding guide device has resilient bearing arm elements (61; 261) or rigid bearing webs (488), which form a slide bush (64; 264; 487).

2. Vehicle seat (1) according to claim 1,
**characterised in that**
the sliding guide device (26; 126; 526) is configured such that, during the lateral displacement, the upper backrest part (17) additionally pivots about the displacement curve (27) and/or about an axis extending at an angle to the displacement curve (27), preferably about a transverse axis (35) extending transversely to the displacement curve (27).

3. Vehicle seat (1) according to either claim 1 or claim 2,
**characterised in that**
the sliding guide device (26; 126; 526) is helical, at least in part.

4. Vehicle seat (1) according to any of claims 1 to 3,
**characterised in that**
the at least one sliding guide element (36, 37, 336, 436, 536, 537) of the sliding guide device (26, 126, 526) is slidably guided in a sliding bearing element (60; 360; 460).

5. Vehicle seat (1) according to any of claims 1 to 4,
**characterised in that**
the at least one sliding guide element (36, 37; 336; 436, 536, 537) comprises a slide bush (64; 264; 487) having a reduced sliding surface (62; 462) as a result of material recesses (63; 263) on the sliding inner surface of said element.

6. Vehicle seat (1) according to any of claims 1 to 5,
**characterised in that**
the sliding guide device (26; 126; 526) comprises a sliding bearing element holder (42, 43, 44; 542), by means of which at least two sliding bearing elements (60; 360; 460) are arranged so as to be held above one another.

7. Vehicle seat (1) according to any of claims 1 to 6,
**characterised in that**
the sliding guide device (26; 126; 526) has a single sliding bearing element holder (542), in which all the sliding bearing elements (60; 360; 460) within the upper backrest part (17) are arranged.

8. Commercial motor vehicle (6), in particular an agricultural utility motor vehicle, comprising at least one vehicle seat (1),
**characterised by**
a vehicle seat (1) according to any of the preceding claims.

## Revendications

1. Siège de véhicule (1), plus particulièrement siège de véhicule utilitaire (1 A), avec une partie d'assise (2), avec un dossier (3) comprenant une partie inférieure de dossier (16) et une partie supérieure de dossier (17), et avec un dispositif de maintien (25), à l'aide duquel la partie supérieure de dossier (17) peut être maintenue de manière mobile par rapport à la partie inférieure du dossier (16),
le dispositif de maintien (25) comprenant un dispositif de guidage coulissant (26 ; 126 ; 526), à l'aide duquel la partie supérieure de dossier (17) est disposé de manière coulissante le long d'une courbe de déplacement (27) par rapport à la partie inférieure de dossier (16), afin de loger de manière coulissante la partie supérieure de dossier (17) au moins partiellement en direction du bord latéral (4A, 4B) de la partie inférieure de dossier (16),
**caractérisé en ce que**
au moins un élément de guidage coulissant (36, 37 ; 336 ; 436, 536, 537) du dispositif de guidage coulissant comprend des éléments de bras de palier élastique (61 ; 261) ou des nervures de palier fixes (488) qui forment une douille de coulissement (64 ; 264 ; 487).

2. Siège de véhicule (1) selon la revendication 1,
**caractérisé en ce que**
le dispositif de guidage coulissant (26 ; 126 ; 526) est conçu de façon à ce que la partie supérieure de dossier (17) tourne, lors du déplacement latéral, en plus autour de la courbe de déplacement (27) et/ou autour d'un axe formant un angle avec la courbe de déplacement (27), de préférence autour d'un axe transversal (35) s'étendant transversalement par rapport à la courbe de déplacement (27).

3. Siège de véhicule (1) selon la revendication 1 ou 2,
**caractérisé en ce que**
le dispositif de guidage coulissant (26 ; 126 ; 526) présente au moins partiellement une forme hélicoïdale.

4. Siège de véhicule (1) selon l'une des revendications 1 à 3,
**caractérisé en ce que**
l'au moins un élément de guidage coulissant (36, 37, 336, 436, 536, 537) du dispositif de guidage coulissant (26, 126, 526) est guidé de manière coulissante dans un élément à palier coulissant (60 ; 360 ; 460).

5. Siège de véhicule (1) selon l'une des revendications 1 à 4,
**caractérisé en ce que**
l'au moins un élément de guidage coulissant (36, 37, 336, 436, 536, 537) comprend, à travers des évidements de matériau (63 ; 263) à l'intérieur de celui-ci, une douille de coulissement (64 ; 264 ; 487) avec une surface de coulissement (62 ; 462) réduite.

6. Siège de véhicule (1) selon l'une des revendications 1 à 5,
**caractérisé en ce que**
le dispositif de guidage coulissant (26 ; 126 ; 526) comprend un support d'élément de palier de coulissement (42, 43, 44 ; 542) à l'aide duquel au moins deux éléments de palier de coulissement (60 ; 360 ; 460) sont maintenus de manière superposée.

7. Siège de véhicule (1) selon l'une des revendications 1 à 6,
**caractérisé en ce que**
le dispositif de guidage coulissant (26 ; 126 ; 526) comprend un seul support d'élément de palier de coulissement (542) dans lequel sont disposés tous les éléments de palier de coulissement (60 ; 360 ; 460) à l'intérieur de la partie supérieure de dossier (17).

8. Véhicule utilitaire (6), plus particulière véhicule utilitaire agricole, avec au moins un siège de véhicule (1),
**caractérisé par**
un siège de véhicule (1) selon l'une des revendications précédentes.
